# EUROPEAN PATENT APPLICATION

(11) **EP 4 671 883 A1**
(43) Date of publication of application: **31.12.2025**
(21) Application number: 23928043.1
(22) Date of filing: 22.03.2023
(51) Int. Cl.: G05B 17/02, G06T 19/00

(54) **SIMULATION SYSTEM AND METHOD FOR DEVICE UNDER TEST, AND FIELD DEVICE, ELECTRONIC DEVICE AND MEDIUM**

(71) Applicant: Siemens Aktiengesellschaft, 80333 München (DE)
(72) Inventor: XU, Weifeng, Shanghai 200082 (CN); LIAO, Zibo, Shanghai 200082 (CN)
(74) Representative: Isarpatent
(86) International application number: PCT/CN2023/083164
(87) International publication number: WO 2024/192730

(57) **Abstract**

Disclosed in the embodiments of the present invention are a simulation system and method for a device under test, and a field device, an electronic device and a medium. The system comprises a field device and a simulation device, wherein the field device is used for collecting image information of a field environment; the simulation device is used for generating a field environment model on the basis of the image information, arranging, in the field environment model, a simulation model of a device under test, and running the simulation model; and the field device is also used for presenting a real-time picture of the field environment in a visual interface, and presenting the simulation model in the real-time picture, the presented simulation model maintaining state synchronization with the simulation model, which is run in the simulation device. The state of a device under test is verified in a real scene environment in a simulation manner, thereby improving the simulation efficiency of the device under test.

## Description

### TECHNICAL FIELD

The present invention relates to the field of simulation technologies, and in particular, to a simulation system and method for a device under test, and a field device, an electronic device, and a medium.

### BACKGROUND

In flexible production, it is a growing trend to incorporate more intelligent automation devices to enhance the productivity of production units (such as factories). Producers need to continuously update and adjust production devices to adapt to new business, new products, new devices, and new production plans. However, a field environment of a production unit is complex and dynamic. How to test a new production device quickly and effectively in field production, and how to connect the new production device seamlessly to the field environment without disrupting other production units, are both challenges.

Currently, a virtual debugging technology and a hardware in the loop (HIL) testing method are being adopted to accelerate the process from design to deployment of a new device on a production field. However, working conditions between virtual simulations and real-world environments may be inconsistent, increasing the design time and cost of the new device.

### SUMMARY

Implementations of the present invention provide a simulation system and method for a device under test, a field device, an electronic device, and a medium.

According to a first aspect, a simulation system for a device under test is provided. The system includes a field device and a simulation device.

The field device is configured to acquire image information of a field environment.

The simulation device is configured to generate a field environment model based on the image information, arrange a simulation model of a device under test in the field environment model, and run the simulation model.

The field device is further configured to present a real-time picture of the field environment in a visual interface, and present the simulation model in the real-time picture, where the presented simulation model remains synchronized in state with the simulation model run in the simulation device.

According to a second aspect, a field device for simulating a device under test is provided. The field device includes:
an environment acquisition module, configured to acquire image information of a field environment;
an anchor point processing module, configured to mark an anchor point in the image information, and position a presented simulation model in a real-time picture of the field environment based on the anchor point, where the simulation model is run in a field environment model included in a simulation device, and the field environment model is generated based on the image information; and
a visualization module, configured to provide a visual interface for presenting the real-time picture, where the simulation model presented in the real-time picture remains synchronized in state with the simulation model run in the simulation device.

According to a third aspect, a simulation method for a device under test is provided. The method includes:
acquiring image information of a field environment;
generating a field environment model based on the image information;
arranging a simulation model of a device under test in the field environment model;
running the simulation model;
presenting a real-time picture of the field environment in a visual interface; and
presenting the simulation model in the real-time picture, where the presented simulation model remains synchronized in state with the simulation model run in a simulation device.

According to a fourth aspect, an electronic device is provided. The electronic device includes:
a processor; and
a memory configured to store executable instructions of the processor.

The processor is configured to read the executable instructions from the memory, and execute the executable instructions to implement the simulation method for a device under test according to any one of the foregoing content.

According to a fifth aspect, a computer-readable storage medium is provided. The computer-readable storage medium has computer instructions stored therein. The computer instructions, when executed by a processor, implement the foregoing simulation method for a device under test.

According to a sixth aspect, a computer program product is provided. The computer program product includes a computer program. The computer program, when executed by a processor, implements the foregoing simulation method for a device under test.

It can be seen that, in the implementations of the present invention, a field environment model is generated based on image information of a field environment, a simulation model of a device under test is arranged and run in the field environment model, and the simulation model remaining synchronized in state is presented in a real-time picture on the field. An environment sensing capability and a process simulation capability are fully used, and a real world and a virtual world are closely connected, so that a state of the device under test may be verified in a real scenario environment by means of simulation, thereby improving simulation efficiency of the device under test.

### BRIEF DESCRIPTION OF THE DRAWINGS

To enable a person of ordinary skill in the art to understand the foregoing and other features and advantages of the present invention more clearly, exemplary embodiments according to the present invention are described in detail below with reference to the accompany drawings.
FIG. 1 is a first exemplary structural diagram of a simulation system for a device under test according to an implementation of the present invention.
FIG. 2 is a second exemplary structural diagram of a simulation system for a device under test according to an implementation of the present invention.
FIG. 3 is a block diagram of a simulation system for a device under test according to an implementation of the present invention.
FIG. 4 is a schematic image of a field environment according to an implementation of the present invention.
FIG. 5 is a schematic diagram of arrangement of a simulation model in a field environment model according to an implementation of the present invention.
FIG. 6 is a schematic diagram of a visual interface in a field device according to an implementation of the present invention.
FIG. 7 is a schematic diagram of a conflict detection alarm according to an implementation of the present invention.
FIG. 8 is an exemplary flowchart of a simulation method for a device under test according to an implementation of the present invention.
FIG. 9 is a structural diagram of an electronic device according to an implementation of the present invention.

### Reference numerals:

| No. | Denotation |
|---|---|
| 101 | Field device |
| 102 | Simulation device |
| 103 | Server |
| 10 | Field manufacturing engineer |
| 11 | Process design engineer |
| 201 | Environment acquisition module |
| 202 | Anchor point processing module |
| 203 | Visualization module |
| 204 | Human-computer interaction module |
| 205 | Auxiliary process simulation module |
| 301 | Database |
| 302 | Communication module |
| 401 | Environment modeling module |
| 402 | Process simulation design module |
| 403 | Simulation engine |
| 20 | Image of field environment |
| 21 | Origin of coordinates |
| 22 | Anchor point |
| 23/24/25 | Workpiece |
| 26 | Simulation model of robot arm |
| 27 | Obstacle |
| 28 | Collision region |
| 30 | Field environment model |
| 40 | Real-time picture |
| 801-806 | Steps |
| 900 | Electronic device |
| 901 | Processor |
| 902 | Memory |

### DETAILED DESCRIPTION

To make the objective, technical solutions, and advantages of the present invention clearer, the present invention is further described in detail below by using embodiments.

For brief and intuitive description, the following describes the solutions of the present invention by describing several representative implementations. A large number of details in the implementations are only used to help understand the solutions of the present invention. However, obviously, implementation of the technical solutions of the present invention may not be limited to these details. To avoid unnecessarily obscuring the solutions of the present invention, some implementations are not described in detail, but only frameworks are provided. In the following description, "including" means "including, but not limited to", and "according to ..." means "at least according to ..., but not limited to only according to ...". Because of the Chinese language habit, when the number of an element is not particularly specified below, it means that the number of the element may be one or more, or may be understood as at least one.

In implementations of the present invention, a field device having an environment sensing function and an object anchoring function interacts with a simulation tool of a device under test, and a field manufacturing engineer and a process design engineer may cooperate with each other, to closely connect a real world to a virtual world. In addition, a state of the device under test is verified in a real scenario environment by means of simulation, so that a number of design iterations of the device under test can be reduced, and the simulation efficiency of the device under test can be improved.

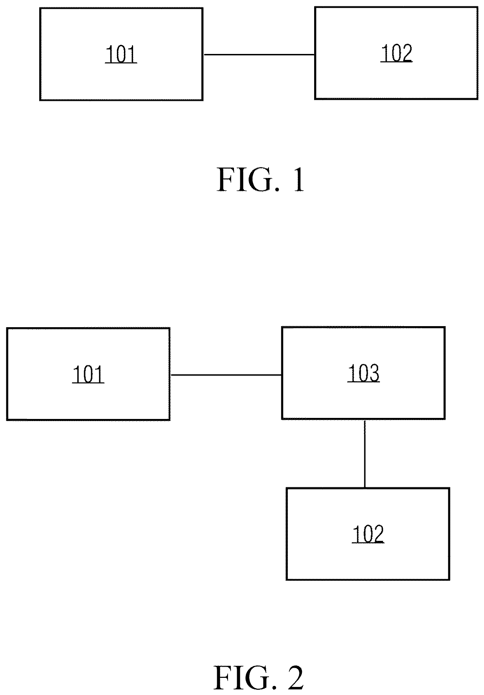

FIG. 1 is a first exemplary structural diagram of a simulation system for a device under test according to an implementation of the present invention.

In FIG. 1, a simulation system for a device under test includes a field device 101 and a simulation device 102. The field device 101 is configured to acquire image information of a field environment. The simulation device 102 is configured to generate a field environment model based on the image information, arrange a simulation model of a device under test in the field environment model, and run the simulation model. The field device 101 is further configured to present a real-time picture of the field environment in a visual interface, and present the simulation model in the real-time picture, where the presented simulation model remains synchronized in state with the simulation model run in the simulation device.

The field environment in which the field device 101 is located may be a field environment of a production unit to which the device under test is deployed. The production unit is a unit that may participate in production and business activities, including industry, mining, commerce, trade, etc. Specifically, the production unit may be implemented as a manufacturing group, a manufacturing plant, a production workshop, an assembly line, etc.

The field device 101 acquires image information (e.g., point cloud data, a video stream, or an RGBD image) of a field environment by using a sensor (e.g., a depth camera, an infrared sensor, a lidar, or an inertial sensor) of the field device. The field device 101 may be implemented as a mobile intelligent device such as a mobile terminal, a personal digital assistant, or a personal computer. The field device 101 sends the acquired image information of the field environment to the simulation device 102. For example, the field device 101 may send the image information of the field environment to the simulation device 102 in a wired connection manner or a wireless connection manner. Optionally, the field device 101 may send the image information of the field environment to the simulation device 102 by using a third-party device (e.g., a server).

The simulation device 102 generates a field environment model based on the image information sent by the field device 101. The field environment model may be implemented as a three-dimensional point cloud model or a three-dimensional computer-assisted design model of the field environment, etc.

For example, the image information sent by the field device 101 is: scanning data obtained by acquiring a three-dimensional field environment using a two-dimensional laser sensor in the field device 101. The simulation device 102 converts the scanning data into a three-dimensional laser point cloud matrix in Cartesian space coordinates, performs data compression on the three-dimensional laser point cloud matrix according to a uniform sampling method, to obtain three-dimensional laser point cloud data, and then performs triangular mesh construction on the three-dimensional laser point cloud data to obtain the field environment model.

For another example, the field device 101 with a time of flight (ToF) camera may be used to acquire RDB-D data (i.e., image information) of the field environment. Then, the simulation device 102 reconstructs a three-dimensional point cloud model of the field environment for the RDB-D data based on a truncated signed distance function (TSDF).

The simulation device 102 includes a modeling tool for generating a simulation model of a device under test. For example, the modeling tool may be implemented as a simulation tool for generating a mechanism model of the device under test or an artificial intelligence (AI) tool for generating an AI simulation model of the device under test.

The mechanism model of the device under test, also referred to as a white-box model of the device under test, is an accurate mathematics model that describes the device under test and is established according to an object in the device under test, an internal mechanism of a production process, or a material flow transmission mechanism. The model may be a mathematics model for obtaining an object or a process based on a mass balance equation, an energy balance equation, a momentum balance equation, a phase balance equation, some property equations, a chemical reaction law, and the like. Parameters of the mechanism model are easy to be adjusted, and the obtained model demonstrates high adaptability.

Different from a mechanism modeling manner, an AI tool generates the simulation model of the device under test in an AI manner. For example, the AI tool may include various types of neural network models. The simulation model of the device under test is obtained by training the neural network model. For example, the neural network model may be implemented as a feedforward neural network (FFNN) model or a feedback neural network. The FFNN model may include: a convolutional neural network (CNN) model, a fully connected neural network (FCN) model, a generative adversarial network (GAN) model, etc. The feedback neural network may include: a recurrent neural network (RNN) model, a long short-term memory (LSTM) model, a Hopfield network model, a Boltzmann machine, etc.

Preferably, the simulation device 102 further parses the field environment model, to determine a constraint condition of the field environment on the device under test. In addition, the simulation device 102 generates the simulation model of the device under test based on the constraint condition. For example, it is assumed that the device under test is a robot arm. The simulation device 102 parses the field environment model, and identifies that a rotation angle of the robot arm cannot be greater than 90 degrees. Otherwise, the robot arm collides with another device in the field environment. Therefore, the constraint condition of the device under test is that the rotation angle of the robot arm cannot be greater than 90 degrees. In the simulation model of the robot arm established based on the constraint condition, it is limited that the rotation angle of the robot arm cannot be greater than 90 degrees. It can be seen that, the field environment model according to the implementations of the present invention may participate in a modeling process of the simulation model of the device under test. Therefore, the simulation model of the device under test better adapts to the field environment, thereby improving modeling accuracy of the simulation model of the device under test.

Exemplary manners of generating the simulation model and the field environment model of the device under test are described above. A person skilled in the art may realize that such descriptions are merely exemplary, and are not intended to limit the scope of protection of the implementations of the present invention.

The simulation device 102 invokes a simulation engine to run the simulation model. After the simulation model is run, the simulation model may generate and output a state parameter. The simulation device 102 may send the state parameter to the field device 101 via a wired connection or a wireless connection. Optionally, the simulation device 102 may send the state parameter to the field device 101 by using a third-party device (e.g., a server). The field device 101 presents a real-time picture of the field environment in a visual interface of the field device, and present the simulation model in the real-time picture, where the presented simulation model remains synchronized in state with the simulation model run in the simulation device. The field device 101 may obtain a simulation model used as a presentation object from the simulation device 102. Optionally, the simulation device 102 may send the simulation model to a third-party device (e.g., a server). Then, the field device 101 may obtain the simulation model from the server.

A state parameter of the simulation model run in the simulation device 102 is sent to the field device 101, so that the field device 101 presents the simulation model that matches the state parameter in a real-time picture. Optionally, the simulation device 102 may send the state parameter of the simulation model to the field device 101 by using a third-party device (e.g., a server). For example, a process design engineer at the simulation device 102 sends a simulation instruction to control the robot arm in the simulation model run in the simulation device 102 to rotate by 90 degrees. In the real-time picture of the field device 101, the robot arm needs to synchronously rotate by 90 degrees correspondingly. Therefore, a field manufacturing engineer at the field device 101 may determine whether the device under test works normally by observing whether the robot arm presented in the real-time picture synchronously rotates by 90 degrees. Therefore, by mutual cooperation between the process design engineer and the field manufacturing engineer, virtual detection may be performed on the device under test.

In one implementation, the field device 101 presents the simulation model in the real-time picture in a superimposing manner. For example, the field device 101 may be implemented as a virtual reality (VR) device superimposing the simulation model in the real-time picture in a VR manner, an augmented reality (AR) device superimposing the simulation model in the real-time picture in an AR manner, or a mixed reality (MR) device superimposing the simulation model in the real-time picture in an MR manner. By superimposing virtual simulation content in a real environment, a field engineer can understand a process design of a device under test more intuitively with impressive immersive experience.

To achieve a more realistic simulation effect, a relative position of the simulation model presented in the field device 101 in the real-time picture is further consistent with a relative position of the simulation model in the simulation device 102 in the field environment model. Such position consistency may be implemented by means of spatial anchor point setting for position tracking.

In one implementation, the field device 101 is configured to mark an anchor point in the image information. The simulation device 102 is configured to position the simulation model in the field environment model based on the anchor point. The field device 101 is configured to position the simulation model based on the anchor point in the real-time picture. For example, based on a trigger operation of a user on a human-computer interaction interface of the field device 101, feature points of an environment are marked in the image information to be used as anchor points for spatial positioning. The field device 101 may send the image information including the anchor point to the simulation device 102. For example, the field device 101 may send the image information including the anchor point to the simulation device 102 in a wired connection manner or a wireless connection manner. Optionally, the field device 101 may send the image information including the anchor point to the simulation device 102 by using a third-party device (e.g., a server).

The simulation device 102 arranges the simulation model in the field environment model based on the anchor point. A specific deployment position of the simulation model in the field environment model may depend on an intended deployment position of the device under test in the field environment. The simulation device 102 invokes a simulation engine to run the simulation model. After the simulation model is run, the simulation model may generate and output a state parameter. The simulation device 102 may send the state parameter to the field device 101 via a wired connection or a wireless connection. Optionally, the simulation device 102 may send the state parameter to the field device 101 by using a third-party device (e.g., a server).

The field device 101 presents a real-time picture of the field environment in a visual interface of the field device, and presents a simulation model positioned based on an anchor point in the real-time picture (a determined position in the real-time picture keeps consistency with a determined position of the simulation model in the simulation device 102), where the presented simulation model remains synchronized in state with the simulation model run in the simulation device. Therefore, the presented simulation model and the simulation model run in the simulation device not only can remain synchronized in state, but also can keep the determined positions consistent.

During actual production, because a field environment of a production unit may be changed (e.g., increasing or reducing stations, or increasing or reducing workpieces), a real-time picture of the field environment usually does not keep consistent with image information used in a modeling process of a field environment model. Therefore, the simulation model run in the simulation device 102 may conflict with a real-time field environment of the production unit. In the implementations of the present invention, a running function of the simulation model is further integrated in the field device 101, to overcome the potential conflict.

In one implementation, the simulation device 102 is configured to run a first function library included in the simulation model, to generate a first state parameter. The field device 101 is configured to present the simulation model based on the first state parameter, and run a second function library included in the simulation model, where an alarm message is sent to the simulation device in a case that a running result of the second function library satisfies an alarm condition. For example, the first function library may include at least one of the following: power consumption calculation of the device under test; and motion control of the device under test (e.g., speed control and direction control).

In one implementation, the second function library includes a conflict detection function. The field device 101 is configured to send an alarm message to the simulation device 102 when the conflict detection function detects that the simulation model conflicts with the field environment. The field device 101 may send the alarm message to the simulation device 102 via a wired connection or a wireless connection. Optionally, the field device 101 may send the state parameter to the simulation device 102 by using a third-party device (e.g., a server).

FIG. 2 is a second exemplary structural diagram of a simulation system for a device under test according to an implementation of the present invention. In FIG. 2, compared with the simulation system shown in FIG. 1, a server 103 is further arranged between the field device 101 and the simulation device 102. The server 103 is configured to exchange, between the field device 101 and the simulation device 102, at least one of the following: the image information of the field environment; the simulation model; a state parameter of the simulation model run in the simulation device; and an alarm message.

Preferably, the simulation system for a device under test in FIG. 1 and FIG. 2 may be applied to flexible production, to rapidly test (i.e., update and adjust) a production device (i.e. the device under test) during flexible production, so as to adapt to a new business, a new product, a new device, and a new production plan.

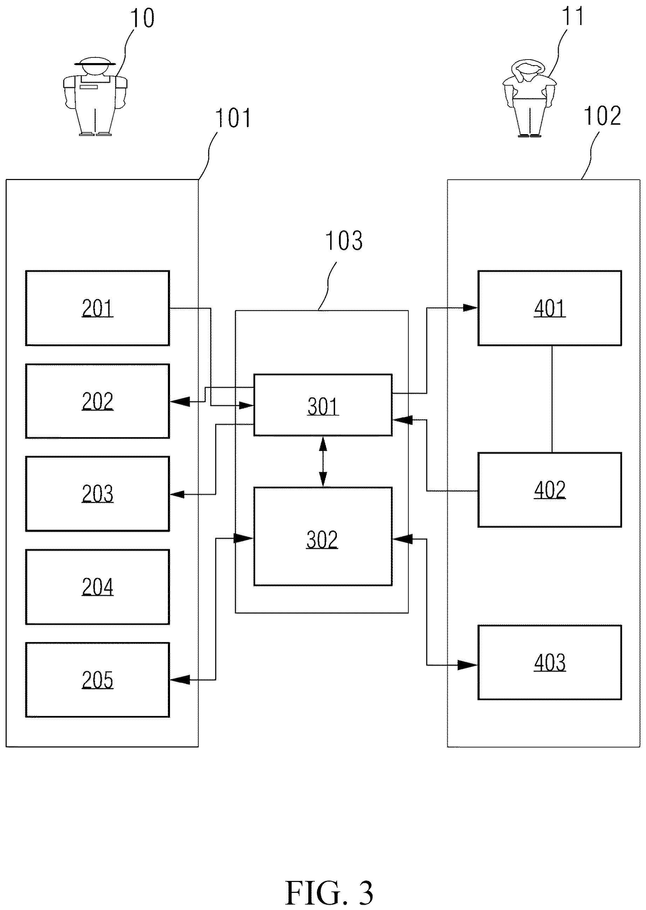

FIG. 3 is a block diagram of a simulation system for a device under test according to an implementation of the present invention. The server 103 is arranged between the field device 101 and the simulation device 102.

The field device 101 includes an environment acquisition module 201, configured to acquire image information of the field environment; an anchor point processing module 202, configured to mark an anchor point in the image information; and a visualization module 203, configured to provide the visual interface. In addition, the anchor point processing module 202 is configured to position the simulation model in the real-time picture based on the anchor point. In addition, the visualization module 203 is configured to provide the visual interface, and present the simulation model based on a first state parameter in the visual interface, where the first state parameter is generated when the simulation device runs a first function library included in the simulation model.

The field device 101 further includes: an auxiliary process simulation module 205, configured to run a second function library included in the simulation model, where an alarm message is generated in a case that a running result of the second function library satisfies an alarm condition; and a human-computer interaction module 204, configured to send the alarm message to the simulation device 102.

The simulation device 102 includes an environment modeling module 401, a process simulation design module 402, and a simulation engine 403. The environment modeling module 401 is configured to generate a field environment model based on the image information sent by the field device 101. The process simulation design module 402 is configured to generate a simulation model of the device under test, and arrange the simulation model in the field environment model based on the anchor point in the image information. The simulation engine 403 is configured to run the simulation model.

The server 103 includes a database 301 and a communication module 302. The database 301 is configured to store the image information of the field environment, the simulation model, and the field environment model. The communication module 302 may transmit the image information, the simulation model, the field environment model, the alarm message, or state data of the simulation model between the simulation device 102 and the field device 101 for visualization.

Based on the system architecture shown in FIG. 3, the following describes a simulation process of a device under test, to implement remote virtual debugging of HIL environment verification. The remote virtual debugging process of the device under test includes:
(1) Field environment data acquisition and three-dimensional point cloud reconstruction

A field manufacturing engineer 10 in a field environment obtains real-world environment data (i.e., image information) by using a field device 101 (e.g., implemented as a mobile device) having an environment acquisition module 201, then creates a spatial anchor point for position tracking in the environment data, and uploads the environment data and the anchor point to a server 103. The anchor point may be set by the field manufacturing engineer 10.

For example, the field manufacturing engineer 10 scans an environment by using an MR device to obtain environment data, and sets a spatial anchor point to record a particular position in the real world. In a process of setting the spatial anchor point, the field manufacturing engineer 10 walks around a workplace of a field environment, so that the MR device captures the environment data. The field manufacturing engineer 10 creates one or more virtual spatial anchor points in a current view of the environment data by using a human-computer interaction module 204 in the MR device. The environment data, the position of the anchor point, and a corresponding environment feature point are stored in the server 103, to be used in a later stage. For detection and description of the anchor point, specifically, a binary robust invariant scalable keypoints (BRISK) algorithm or a features from accelerated segment Test (FAST) algorithm may be used.

(2) Environment modeling and production process design and simulation

A process design engineer 11 builds a simulation model of a device under test by using a process simulation system in a simulation device 102. In addition, the process design engineer 11 downloads environment data and an anchor point from a server 103 by using the simulation device 102. The environment data is configured for three-dimensional modeling of a field environment. The process design engineer 11 uses the anchor point as an arrangement position reference point of the simulation model of the device under test in a field environment model. The simulation device 102 uploads the simulation model and the field environment model to the server 103, to perform remote virtual debugging on the device under test.

(3) Remote virtual debugging of HIL environment

The field manufacturing engineer 10 and the process design engineer 11 start to cooperate to perform remote virtualization on the device under test in real time. Specific steps include:
(3.1) Establish a connection between the field device 101 and the simulation device 102. The field device 101 is connected to the server 103 to download a simulation item, where the simulation item includes a simulation model of a device under test and a spatial anchor point. The simulation device 102 is connected to the server 103 and loads a same simulation item.
(3.2) Map virtual world space data in the simulation device 102 to the real world presented in the field device 101 by using anchor points. Specifically, the anchor point is used as reference coordinates to position the simulation model in the field environment model. The simulation model is mapped to a corresponding spatial position in the real world presented in the field device 101 by synchronizing the anchor points.
(3.3) Synchronize a simulation object. The field device 101 may synchronize environment data to the server 103 in real time, and an environment modeling module 401 of the simulation device 102 may synchronize the environment data to the environment model, to update the field environment model. In addition to the environment data, the simulation device 102 may further synchronize a state parameter (e.g., a speed, an acceleration, or a rotation angle) of the device under test to the server 103, and the server 103 sends the state parameter to the field device 101 in real time, to visualize a simulation process.

It can be seen that rapid response and verification in remote cooperation significantly improve the working efficiency. In addition, the field manufacturing engineer 10 and the process design engineer 11 implement remote virtual debugging.

The following describes the implementations of the present invention by using an example in which the field environment is a workpiece picking pipeline and the device under test is a robot arm.

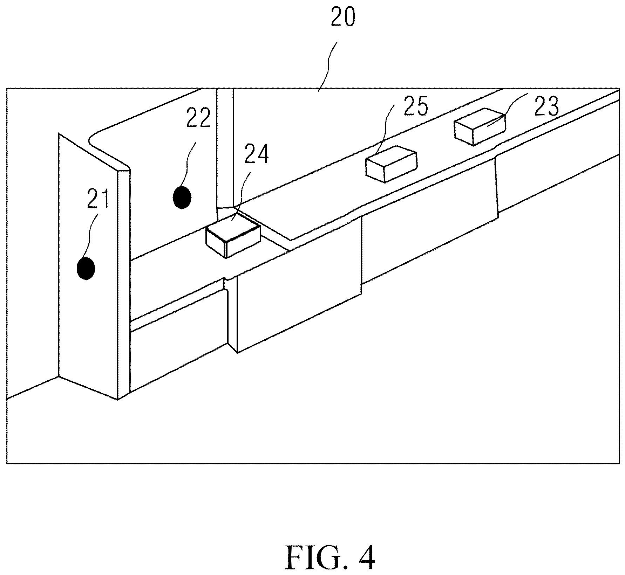

FIG. 4 is a schematic image of a field environment according to an implementation of the present invention. An image 20 includes a workpiece 23, a workpiece 24, and a workpiece 25 on a workbench in a field environment. An origin of coordinates of the image 20 is 21. The image 20 has an anchor point 22.

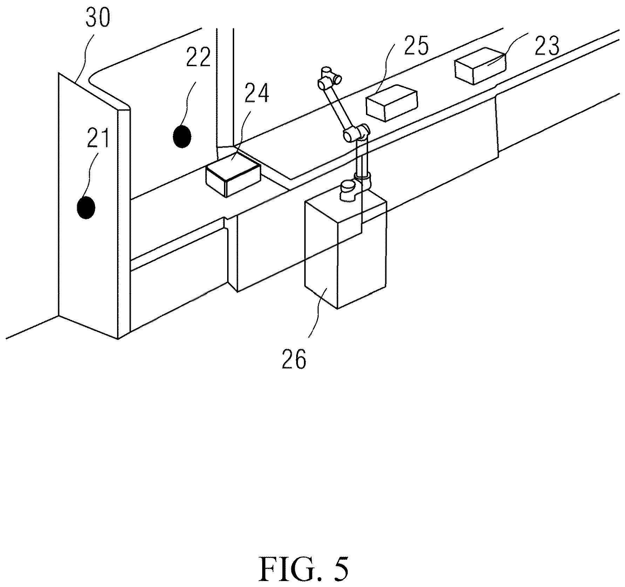

FIG. 5 is a schematic diagram of arrangement of a simulation model in a field environment model according to an implementation of the present invention. FIG. 5 shows a field environment model 30 established based on the image 20. It can be seen that the field environment model 30 also includes a workpiece 23, a workpiece 24, and a workpiece 25. In addition, an origin of coordinates of the field environment model keeps consistency with the origin of coordinates of the image 20. The anchor point 22 is used as a reference point, and a simulation model 26 of a robot arm is arranged in the field environment model 30. After running a first function library (e.g., including a speed control function, a direction control function, and a grabbing function) of the simulation model 26, the robot arm may pick up a workpiece on the workbench in the field environment model 30.

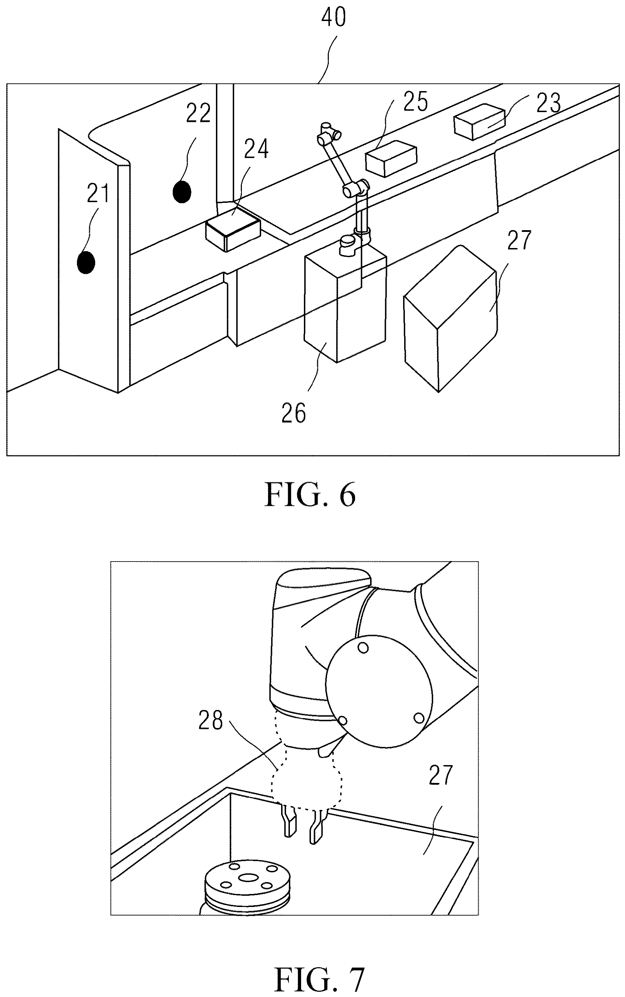

FIG. 6 is a schematic diagram of a visual interface in a field device according to an implementation of the present invention. A real-time picture 40 of a field environment includes a workpiece 23, a workpiece 24, and a workpiece 25 on a workbench in the field environment. An origin of coordinates of the real-time picture keeps consistency with the origin of coordinates of the image 20. The anchor point 22 is used as a reference point, and the simulation model 26 having a running state consistent with that of a simulation model arranged in the field environment model is presented in the real-time picture 40 in a superimposing manner. The real-time picture 40 of the field environment further includes an obstacle 27 that is not included in the field environment model 30. In the field device, a conflict detection function included in a second function library of the simulation model 26 may be loaded and run, to prevent the simulation model 26 from colliding with the obstacle 27.

FIG. 7 is a schematic diagram of a conflict detection alarm according to an implementation of the present invention. When it is detected that a running track of the simulation model 26 collides with the obstacle 27, a collision region 29 is highlighted to generate alarm information. The field device sends the alarm information to the simulation device, to prompt the simulation device to update the field environment model.

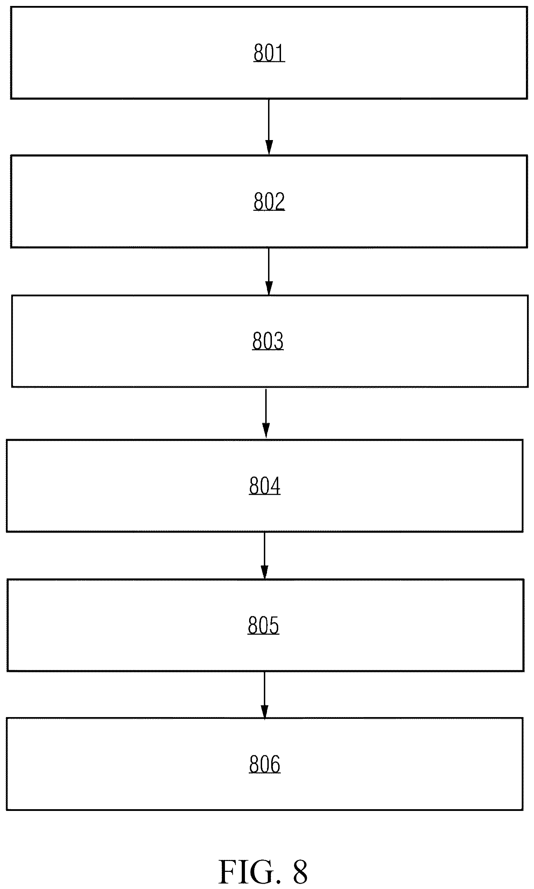

FIG. 8 is an exemplary flowchart of a simulation method for a device under test according to an implementation of the present invention. As shown in FIG. 8, the method includes the following steps:
Step 801: Acquire image information of a field environment.
Step 802: Generate a field environment model based on the image information.
Step 803: Arrange a simulation model of a device under test in the field environment model.
Step 804: Run the simulation model.
Step 805: Present a real-time picture of the field environment in a visual interface.
Step 806: Present the simulation model in the real-time picture, where the presented simulation model remains synchronized in state with the simulation model run in a simulation device.

In one implementation, the method includes: running a first function library included in the simulation model, to generate a first state parameter; presenting the simulation model based on the first state parameter; and running a second function library included in the simulation model, where an alarm message is sent to the simulation device in a case that a running result of the second function library satisfies an alarm condition.

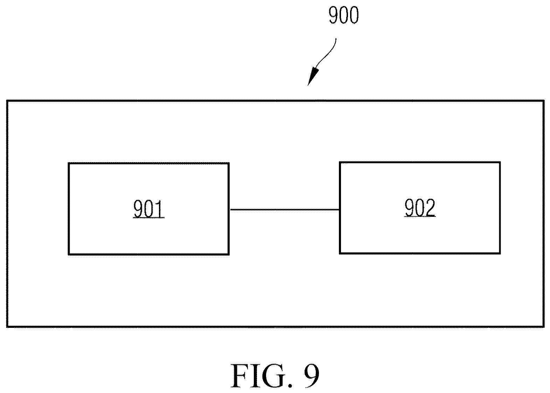

An implementation of the present invention further provides an electronic device that has a processor-memory architecture and is configured to simulate a device under test. FIG. 9 is a structural diagram of an electronic device according to an implementation of the present invention.

As shown in FIG. 9, the electronic device 900 includes a processor 901, a memory 902, and a computer program that is stored in the memory 902 and may be run on the processor 901. The computer program, when executed by the processor 901, implements any one of the foregoing simulation methods for a device under test. The memory 902 may be specifically implemented as various storage media such as an electrically erasable programmable read-only memory (EEPROM), a flash memory, and a programmable read-only memory (PROM). The processor 901 may be implemented to include one or more central processing units or one or more field programmable gate arrays, where the field programmable gate arrays are integrated into one or more central processing unit cores. Specifically, the central processing unit or the central processing unit core may be implemented as a CPU, an MCU, a DSP, or the like.

It should be noted that not all steps and modules in the aforementioned processes and structural diagrams are mandatory. Some steps or modules may be omitted based on actual requirements. The execution order of the steps is not fixed and may be adjusted as required. The division of modules is merely based on functional distinctions for descriptive convenience. In practical implementation, the functions of one module may be distributed across a plurality of modules, and a plurality of modules may be integrated into a single module. These modules may be located within the same device or be distributed across different devices.

Hardware modules in various implementations may be implemented mechanically or electronically. For example, a hardware module may include permanently designed circuits or logic devices (e.g., dedicated processors such as FPGA or ASIC) for performing particular operations. The hardware module may alternatively include programmable logic devices or circuits (e.g., general-purpose or other programmable processors) temporarily configured by software to perform particular operations. The choice of whether to implement a hardware module mechanically, using dedicated permanent circuits, or using temporarily configured circuits (e.g., configured via software) may be determined based on cost and time considerations.

The above descriptions are merely preferred implementations of the present invention and are not intended to limit the scope of protection of the present invention. Any modifications, equivalent replacements, or improvements made within the spirit and principles of the present invention shall fall within the scope of protection of the present invention.

## Claims

1. A simulation system for a device under test, comprising a field device (101) and a simulation device (102), wherein
the field device (101) is configured to acquire image information of a field environment;
the simulation device (102) is configured to generate a field environment model based on the image information, arrange a simulation model of a device under test in the field environment model, and run the simulation model; and
the field device (101) is further configured to present a real-time picture of the field environment in a visual interface, and present the simulation model in the real-time picture, the presented simulation model remaining synchronized in state with the simulation model run in the simulation device.

2. The system according to claim 1, wherein
the field device (101) is configured to mark an anchor point in the image information;
the simulation device (102) is configured to position the simulation model in the field environment model based on the anchor point; and
the field device (101) is configured to position the simulation model based on the anchor point in the real-time picture.

3. The system according to claim 1 or 2, further comprising:
a server (103) arranged between the field device (101) and the simulation device (102),
wherein the server (103) is configured to exchange, between the field device (101) and the simulation device (102), at least one of the following:
the image information; the simulation model; a state parameter of the simulation model; and an alarm message.

4. The system according to claim 1 or 2, wherein
the simulation device (102) is configured to run a first function library comprised in the simulation model, to generate a first state parameter; and
the field device (101) is configured to present the simulation model based on the first state parameter, and run a second function library comprised in the simulation model, an alarm message being sent to the simulation device (102) in a case that a running result of the second function library satisfies an alarm condition.

5. The system according to claim 4, wherein the second function library comprises a conflict detection function; and
the field device (101) is configured to send an alarm message to the simulation device (102) when the conflict detection function detects that the presented simulation model conflicts with the field environment in the real-time picture.

6. The system according to claim 2, wherein the field device (101) comprises:
an environment acquisition module (201), configured to acquire image information of the field environment;
an anchor point processing module (202), configured to mark an anchor point in the image information, and position the simulation model in the real-time picture based on the anchor point; and
a visualization module (203), configured to provide the visual interface.

7. The system according to claim 6, wherein
the visualization module (203) is configured to present the simulation model based on a first state parameter in the visual interface, the first state parameter being generated when the simulation device (102) runs a first function library comprised in the simulation model; and
the field device (101) comprises:
an auxiliary process simulation module (205), configured to run a second function library comprised in the simulation model, an alarm message being generated in a case that a running result of the second function library satisfies an alarm condition; and
a human-computer interaction module (204), configured to send the alarm message to the simulation device (102).

8. A field device for simulating a device under test, comprising:
an environment acquisition module (201), configured to acquire image information of a field environment;
an anchor point processing module (202), configured to mark an anchor point in the image information, and position a presented simulation model in a real-time picture of the field environment based on the anchor point, wherein the simulation model is run in a field environment model comprised in a simulation device, and the field environment model is generated based on the image information; and
a visualization module (203), configured to provide a visual interface for presenting the real-time picture, wherein the simulation model presented in the real-time picture remains synchronized in state with the simulation model run in the simulation device.

9. The field device according to claim 8, wherein
the visualization module (203) is configured to present the simulation model based on a first state parameter, the first state parameter being generated when the simulation device runs a first function library comprised in the simulation model; and
the field device comprises:
an auxiliary process simulation module (205), configured to run a second function library comprised in the simulation model, an alarm message being generated in a case that a running result of the second function library satisfies an alarm condition; and
a human-computer interaction module (204), configured to send the alarm message to the simulation device.

10. A simulation method for a device under test, comprising:
acquiring (801) image information of a field environment;
generating (802) a field environment model based on the image information;
arranging (803) a simulation model of a device under test in the field environment model;
running (804) the simulation model;
presenting (805) a real-time picture of the field environment in a visual interface; and
presenting (806) the simulation model in the real-time picture, wherein the presented simulation model remains synchronized in state with the simulation model run in a simulation device.

11. The method according to claim 10, comprising:
running a first function library comprised in the simulation model, to generate a first state parameter;
presenting the simulation model in the real-time picture based on the first state parameter; and
running a second function library comprised in the simulation model, wherein an alarm message is sent to the simulation device in a case that a running result of the second function library satisfies an alarm condition.

12. An electronic device, comprising:
a processor (901); and
a memory (902) configured to store executable instructions of the processor (901),
the processor (901) being configured to read the executable instructions from the memory (902), and execute the executable instructions to implement the simulation method for a device under test according to any one of claims 10 to 11.

13. A computer-readable storage medium, having computer instructions stored therein, wherein the computer instructions, when executed by a processor, implement the simulation method for a device under test according to any one of claims 10 to 11.

14. A computer program product, comprising a computer program, wherein the computer program, when executed by a processor, implements the simulation method for a device under test according to any one of claims 10 to 11.
